# EUROPÄISCHE PATENTSCHRIFT

(11) **EP 0 367 106 B1**
(45) Veröffentlichungstag und Bekanntmachung des Hinweises auf die Patenterteilung: **21.07.1993**
(21) Anmeldenummer: 89119894.7
(22) Anmeldetag: 26.10.1989
(51) Int. Cl.: C08G 77/48, C08G 77/54, C08G 77/26

(54) **Organosiloxanamin-Copolykondensate, Verfahren zu ihrer Herstellung und Verwendung (I)**
Organosiloxane amine copolycondensates, process for preparing these and their use
Copolycondensats organosiloxane-amine, procédé pour leur fabrication et leur emploi

(30) Priorität: 04.11.1988 DE 3837418
(43) Veröffentlichungstag der Anmeldung: 09.05.1990
(73) Patentinhaber: Degussa Aktiengesellschaft, 60311 Frankfurt (DE)
(72) Erfinder: Panster, Peter, Dr., D-6458 Rodenbach (DE); Gradl, Robert, D-8755 Alzenau (DE); Kleinschmit, Peter, Dr., D-6450 Hanau 9 (DE)

(56) Entgegenhaltungen:
- EP-A- 0 205 889
- EP-A- 0 280 946
- EP-A- 0 282 737
- EP-A- 0 327 795
- DE-A- 2 834 691
- FR-A- 2 413 416

## Beschreibung

Gegenstand der Erfindung sind Copolykondensate eines tertiären Organosiloxanamins mit einer oder mehreren weiteren Siloxankomponenten. Weiterhin werden Verfahren zur Herstellung und Verwendung dieser neuen Produkte beschrieben. Die Copolykondensate können bei gleicher chemischer Zusammensetzung in verschiedenen Formen, z.B. als sog. Block-Copolymere, statistische Copolymere oder sog. gemischte Copolymere vorliegen. Die neuen Produkte sind unlöslich in Wasser und organischen Lösungsmitteln und eignen sich besonders als Metalladsorber und als Adsorber für organische Moleküle.

Bereits bekannt sind gemäß der Deutschen Patentschrift 31 20 214 unlösliche Organosiloxanamine, die sich durch besonders gute chemische und physikalische Eigenschaften insbesondere im Vergleich zu analogen Systemen auf Basis organischer Polymerer oder auch speziell modifizierter anorganischer Polymersysteme auszeichnen. Diese Organosiloxanamine können als schwach basische Ionenaustauscher, als Adsorber, als Wirkstoffträger, als Träger heterogenisierter homogener Katalysatoren oder als heterogene Base in basenkatalysierten Reaktionen eingesetzt werden. Die Matrix dieser Produkte läßt sich quasi maßgeschneidert herstellen, z.B. in bezug auf den gegebenenfalls für eine Verwendung als Katalysatorträger wichtigen Aspekt, daß die Dichte an funktionellen Gruppen durch den Einbau von Silicium-, Titan-, Zirkonium- und Aluminium-enthaltenden Vernetzern gesteuert werden kann. Diese Produkte lassen sich chemisch somit in vielfältiger Weise modifizieren, um den vielfältigen Anwendungen gerecht zu werden. Diese Modifizierung bezieht sich jedoch nur auf den Einbau chemisch nicht funktioneller Gruppierungen, denn diese Polymeren weisen als einzige Funktionalität eine sekundäre oder eine tertiäre Amingruppierung auf. Die Herstellung von Polymeren dieser Art in Kugelform wird in der (nicht vorveröffentlichen) EP-A - 0 327 795 beschrieben.

Es hat sich inzwischen jedoch bei verschiedenen Anwendungen dieser Polysiloxane als vorteilhaft erwiesen, unterschiedlich funktionelle Gruppen in einer Polymermatrix zu kombinieren. Durch diese Kombination lassen sich Effekte erzeugen, die über die Summe der Wirkungen der Einzel komponenten hinausgehen (Synergismus), wobei gleichzeitig durch die verschiedenen Möglichkeiten der Anordnung der unterschiedlichen Funktionalitäten im Polymersystem, gegebenenfalls in Kombination mit Vernetzern, weitere Möglichkeiten eröffnet werden. In der EP-A - 0 282 737 wird die recht aufwendige Herstellung von Acylthioharnstoffgruppen-haltiger Organopolysiloxane beschrieben, die durch Umsetzung der aus der DE-B- 31 20 214 bekannten Polymere z. B. mit einem Isothiocyanat umsetzt. Copolykondensate werden ebenfalls erwähnt. Aufgrund der besonders vorteilhaften stofflichen Eigenschaften der in der deutschen Patentschrift 31 20 214 beschriebenen tertiären Organosiloxanamine und des günstigen Polykondensationsverhaltens der entsprechenden Monomeren haben wir uns die Aufgabe gestellt, Copolykondensate zu entwickeln, bei denen eine Komponente ein tertiäres Aminosiloxan ist, ohne daß sie Acylthioharnstoffgruppen enthalten.

Diese Aufgabe wurde dadurch gelöst, daß Organosiloxanamin-Copolykondensate entwickelt wurden, die dadurch gekennzeichnet sind, daß sie aus Einheiten der Formel 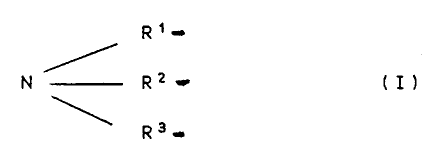
und aus Einheiten der Formel 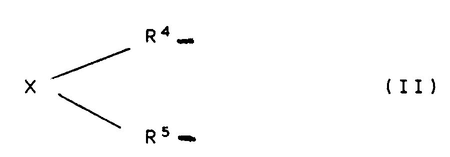
bestehen, in welchen R¹ bis R⁵ gleich oder verschieden sind und eine Gruppe der allgemeinen Formel 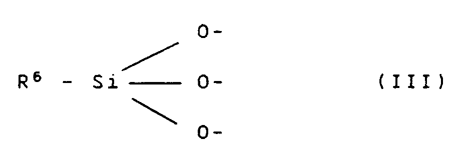
bedeuten, wobei R⁶ direkt an das Stickstoffatom bzw. den zweibindigen Rest X gebunden ist und eine lineare oder verzweigte Alkylengruppe mit 1 bis 10 C-Atomen, eine Cycloalkylengruppe mit 5 bis 8 C-Atomen oder eine Einheit der allgemeinen Formel 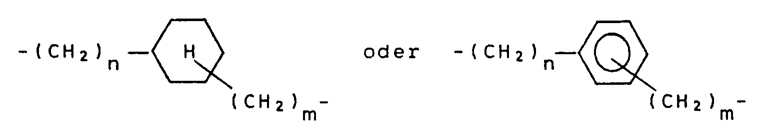
darstellt, in der n eine Zahl von 1 bis 6 ist und die Zahl stickstoffständiger bzw. X-ständiger Methylengruppen angibt und m eine Zahl von 0 bis 6 ist, wobei die freien Valenzen der an das Siliciumatom gebundenen Sauerstoffatome wie bei Kieselsäuregerüsten durch Siliciumatome weiterer Gruppen der Formel (III) und/oder über die Metallatome in einem oder mehreren vernetzenden Brückengliedern 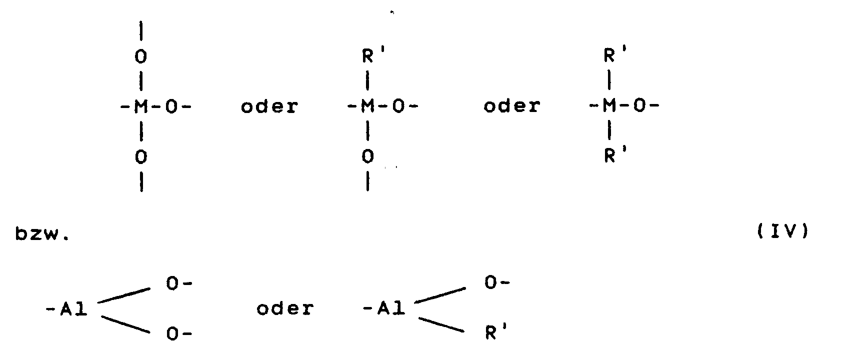
abgesättigt sind, M ein Silicium-, Titan- oder Zirkoniumatom und R' eine lineare oder verzweigte Alkylgruppe mit 1 bis 5 C-Atomen ist und das Verhältnis der Siliciumatome aus den Gruppen der allgemeinen Formel (III) zu den Metallatomen in den Brückengliedern 1 : 0 bis 1 : 10 beträgt,
X in Formel (II) für 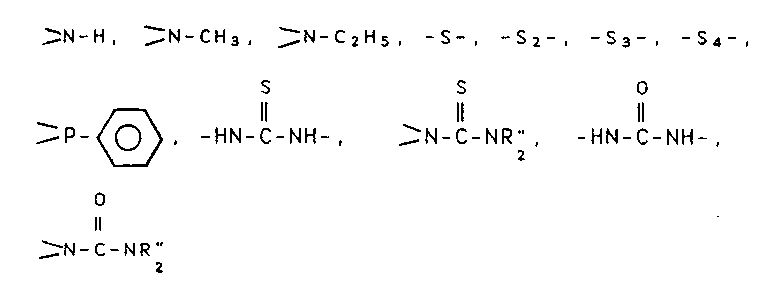
steht, wobei R" gleich H oder eine lineare oder verzweigte Alkylgruppe mit 1 bis 5 C-Atomen bedeutet.

Das Verhältnis der beiden Komponenten nach Formel (I) und Formel (II) liegt in den Grenzen von 0,01 : 99,99 Mol% bis 99,99 : 0,01 Mol%. Bevorzugte Zusammensetzungen enthalten jedoch mindestens 5 Mol% Einheiten nach Formel (I) und hochstens 95 Mol% Einheiten nach Formel (II) und umgekehrt. Das in der Praxis zu wählende Verhältnis hängt in erster Linie von der vorgesehenen Verwendung des jeweiligen Copolykondensates und den hierfür erforderlichen chemischen und physikalischen Eigenschaften ab, so z. B. davon, ob eine hohe Dichte an funktionellen Gruppen nach Formel (II) gewünscht wird oder nicht. Dieser Aspekt kann z. B. bei der Verwendung als Katalysatorträger eine wichtige Rolle spielen.

Dies trifft natürlich auch hinsichtlich der Frage zu, in welcher Form die Copolykondensate vorliegen, ob es sich um ein sog. statisches Copolykondensat (Random-Copolykondensat) oder um ein sog. Block-Copolykondensat oder um ein sog. gemischtes Copolykondensat handelt.

Erfindungsgemäß können die neuen Copolykondensate in bezug auf die Einheiten nach Formeln (I), (II) und (IV) in jeder der drei genannten Formen vorliegen. Dies bedeutet, daß im Falle eines reinen statistischen Copolykondensats, das Einheiten nach Formel (I) und (II) und gegebenenfalls auch Einheiten nach Formel (IV) enthält, eine rein statistische Verteilung der Komponenten vorliegt, entsprechend den molaren Verhältnissen der Ausgangsprodukte unter Berücksichtigung der im Fall der Einheiten (I) und (II) jeweils vorhandenen Siliciumgruppierungen nach Formel (III) und der Funktionalität der Vernetzergruppierung (IV).

Im Falle eines sog. Block-Copolykondensats liegt eine Bildung von Blöcken gleicher Einheiten nach Formel (I) und (II) und gegebenenfalls (IV) vor.

Schließlich weist ein sog. gemischtes Copolykondensat sowohl Strukturen eines statistischen Copolykondensats als auch eines Block-Copolykondensats auf. Dabei können die Einheiten nach Formel (I) oder Formel (II) oder Formel (IV) sowohl als statistisches als auch als Block-Copolykondensat vorliegen.

Die monomeren Bausteine der erfindungsgemäßen Copolykondensate sind prinzipiell bekannte Verbindungen, beispielsweise der Formeln

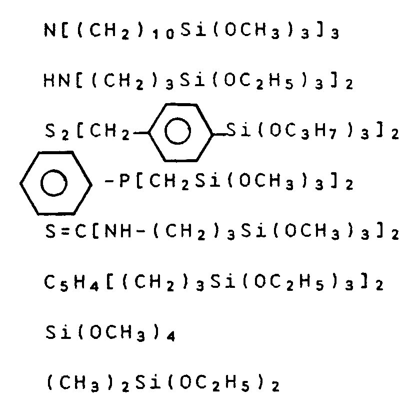

Die Zusammensetzung der daraus erhältlichen Polymereinheiten läßt sich durch die Formeln 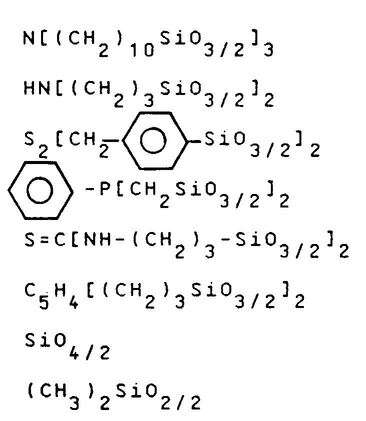
beschreiben.

Besondere Vorteile bezüglich der Verfügbarkeit der Ausgangsmaterialien und der stofflichen Eigenschaften der Endprodukte werden mit Copolymeren erreicht, die aus Einheiten der Formeln (I) und (II) bestehen, in welchen R¹ bis R⁵ für eine Gruppe der Formel 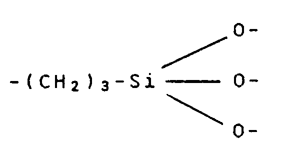
stehen.

Gegenstand der Erfindung sind auch Verfahren zur Herstellung der neuen Copolykondensate. Ein Verfahren, nach dem statistische Copolykondensate erhalten werden, sieht vor, daß man ein tertiäres Aminoorganosilan der allgemeinen Formel 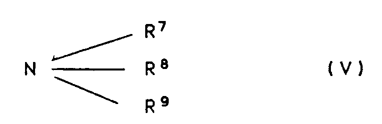
zusammen mit einem organofunktionellen Silan 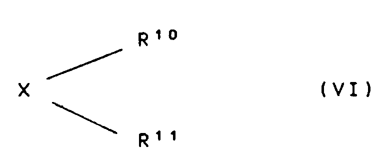
entsprechend der gewünschten stöchiometrischen Zusammensetzung des herzustellenden Copolykondensates, wobei R⁷ bis R¹¹ gleich oder verschieden sind und eine Gruppe der allgemeinen Formel

R⁶-Si(OR¹²)₃ (VII)

bedeuten,
R⁶ dieselbe Bedeutung wie in Formel (III) hat,
R¹² eine lineare oder verzweigte Alkylgruppe mit 1 bis 5 C-Atomen bedeutet und
X dieselbe Bedeutung wie in Formel (II) hat,
gegebenenfalls nach Zusatz eines oder mehrerer Vernetzer der allgemeinen Formel 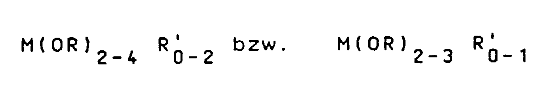
wobei M ein Silicium-, Titan-, Zirkon- oder Aluminiumatom,
R′ eine lineare oder verzweigte Alkylgruppe mit 1 bis 5 C-Atomen oder eine Phenylgruppe ist und R eine lineare oder verzweigte Alkylgruppe mit 1 bis 5 C-Atomen bedeutet und wobei das Verhältnis der Siliciumatome aus den Gruppen der allgemeinen Formel (VII) zu den Metallatomen in den Brückengliedern 1 : 0 bis 1 : 10 beträgt,
in einem weitgehend wassermischbaren, aber Aminoorganosilan nach Formel (V) und organofunktionelles Silan nach Formel (VI) sowie Vernetzer lösenden Lösungsmittel auflöst und der Lösung unter Rühren eine zumindest für die vollständige Hydrolyse und Kondensation ausreichende Menge Wasser zufügt, dann das Reaktionsgemisch unter Weiterrühren bei einer bestimmten Temperatur im Bereich von Raumtemperatur bis 200° C geliert, den sich bildenden Feststoff, gegebenenfalls nach Zusatz von weiterem Lösungsmittel oder Wasser, noch bis zu 48 Stunden bei Raumtemperatur bis 200° C, bei Normaldruck oder einem Druck, welcher der Summe der Partialdrucke bei der jeweiligen Temperatur entspricht, rührt, dann das gebildete Copolykondensat nach gängigen Techniken von der flüssigen Phase abtrennt, gegebenenfalls wäscht, bei Raumtemperatur bis 250° C, gegebenenfalls unter Schutzgasatmosphäre oder im Vakuum trocknet, gegebenenfalls anschließend 1 bis 100 Stunden bei Temperaturen von 150 bis 300° C unter Schutzgasatmosphäre oder im Vakuum tempert, gegebenenfalls mahlt und/oder klassifiziert.

Prinzipiell können als Ausgangsstoffe für das Verfahren anstelle der Alkoxysilylverbindungen auch die entsprechenden Halogenid- oder Phenoxyverbindungen eingesetzt werden, doch bietet deren Verwendung keine Vorteile, sondern kann, z. B. im Fall der Chloride, Schwierigkeiten durch die bei der Hydrolyse freiwerdende Salzsäure verursachen.

Die Hydrolyse der Ausgangsstoffe und gegebenenfalls Vernetzer muß in einem weitgehend wassermischbaren, aber die Ausgangsstoffe lösenden Lösungsmittel durchgeführt werden. Bevorzugt werden dabei Alkohole verwendet, die zu den Alkoxygruppierungen an den monomeren Vorstufen der Ausgangsstoffe bzw. an den Metallatomen der gegebenenfalls eingesetzten Vernetzer korrespondieren. Besonders geeignet ist Methanol, Ethanol, n- und i-Propanol, n- und i-Butanol oder n-Pentanol. Auch Gemische solcher Alkohole können als Lösungsmittel bei der Hydrolyse eingesetzt werden. Anstelle von Alkoholen können auch andere polare Lösungsmittel, die weitgehend wassermischbar sind, verwendet werden, doch erweist sich dies aus verfahrenstechnischen Gründen wegen der mit dem hydrolytisch abgespalteten Alkohol zustandekommenden heterogenen Lösungsmittelgemische als ungünstiger.

Bevorzugt führt man die Hydrolyse mit einem Überschuß an Wasser über die stöchiometrisch erforderliche Menge durch. Die zur Hydrolyse benötigte Menge Wasser hängt von der Hydrolysegeschwindigkeitg der jeweils verwendeten Silane bzw. Vernetzer derart ab, daß mit zunehmender Menge Wasser raschere Hydrolyse erfolgt; allerdings kann eine Obergrenze durch auftretende Entmischung und Ausbildung eines Zweiphasensystems vorgegeben sein. Grundsätzlich ist eine Hydrolyse in homogener Lösung vorzuziehen. Aufgrund der genannten beiden Aspekte wird in praxi gewichtsmäßig etwas weniger Wasser verwendet als gemeinhin die Gewichtssumme von Organosilan und Vernetzer ausmacht.

Die Polykondensation kann bei verschiedenen Temperaturen durchgeführt werden. Nachdem die Polykondensation bei höheren Temperaturen am schnellsten verläuft, ist es am einfachsten, diese bei Rückflußtemperatur oder knapp darunter erfolgen zu lassen. Prinzipiell kann dies jedoch bei noch höherer Temperatur, unter Druck, geschehen. Bei der Polykondensation kann das Reaktionsgemisch zu einer festen Masse erstarren. Aus diesem Grunde ist es angebracht, eine entsprechende Menge Lösungsmittel oder Wasser zur Verdünnung zuzusetzen.

Das Lösungsmittel wird dabei in der Regel dasselbe sein, das schon bei der Hydrolyse der Silane eingesetzt wurde, d. h. bevorzugt wird ein niederer Alkohol mit 1 bis 5 C-Atomen verwendet. Alternativ zu der Verdünnung mit einem Lösungsmittel kann natürlich auch mit Wasser verdünnt werden. Was im Einzelfall verwendet wird, hängt auch davon ab, welche physikalischen Eigenschaften das herzustellende Copolykondensat haben soll. Auch durch die Dauer und Temperatur der bis zu 48-stündigen Nachreaktion kann hierauf Einfluß genommen werden. In der Regel führt eine Nachreaktion bei höherer Temperatur zu einer Erhöhung der mechanischen Stabilität und einer gefestigten Struktur des gebildeten Produktes.

Die Abtrennung des gebildeten Feststoffs kann nach gängigen Techniken, wie Filtrieren, Dekantieren oder Zentrifugieren oder auch durch Abdestillieren der flüssigen Phase erfolgen. Die Waschung des gebildeten Feststoffs wird bevorzugt mit dem bei der Fällung verwendeten Lösungsmittel oder mit Wasser durchgeführt. Die Maßnahme der Temperung erweist sich im Hinblick auf eine Erhöhung der physikalischen Stabilität der Polykondensate oft als sinnvoll.

Das getrocknete bzw. getemperte Produkt kann in üblichen Vorrichtungen in verschiedene Korngrößenfraktionen klassifiziert werden. Von den Aufarbeitungsmaßnahmen Waschung, Trocknung, Temperung und Klassifizierung kann, je nach Umständen, die eine oder andere entfallen oder in einer anderen Reihenfolge durchgeführt werden. Eine Klassifizierung kann z. B. auch an flüssigkeitsfeuchtem, getrocknetem oder getempertem Produkt durchgeführt werden.

Die Dauer der Hydrolyse hängt von der Hydrolyseneigung von Ausgangsstoff und/oder Vernetzer und von der Temperatur ab. Die Hydrolysebereitschaft und damit -geschwindigkeit hängt insbesondere von der Art der Silicium- bzw. Titan-, Zirkonium- oder Aluminium-ständigen Alkoxygruppen ab, wobei die Methoxygruppe am schnellsten hydrolysiert und mit steigender Kettenlänge eine Verlangsamung eintritt. Hydrolyse und Polykondensation können daher durch Zusatz von Basen, wie Ammoniak, aber auch von üblichen Kondensationskatalysatoren, wie Dibutylzinndiacetat, beschleunigt werden.

Um ein unterschiedliches Hydrolyse- und Polykondensationsverhalten der monomeren Komponenten eines statistischen, gegebenenfalls vernetzten Copolykondensates auszugleichen, können nach einer erfindungsgemäßen Herstellungsvariante die monomeren Komponenten nach Formel (V) und (VI) und der oder die gegebenenfalls vorhandenen Vernetzer zunächst vorkondensiert werden.

Hierzu wird das Aminosilan nach Formel (V), die Monomerkomponente nach Formel (VI) und der oder die Vernetzer nach Formel (VIII) zusammen 5 Minuten bis 72 Stunden ohne oder unter Verwendung eines der vorstehend gewählten Lösungsmittel (bevorzugt eines zu den Alkoxygruppen korrespondierenden Alkohols mit 1 bis 5 C-Atomen) in Gegenwart von 1 bis 100, bevorzugt 1 bis 50 Mol%, der zur vollständigen Hvdrolyse stöchiometrisch erforderlichen Menge Wasser, bei Raumtemperatur bis 200° C vorkondensiert. Um diesen Vorkondensationseffekt zu begünstigen kann dabei, zusätzlich zu dem vorhandenen Aminoorganosilan, noch ein weiterer Kondensationskatalysator zugesetzt werden. Bevorzugt wird Ammoniak verwendet. Nach erfolgter Vorkondensation wird die vollständige Hydrolyse und Polykondensation wie schon beschrieben, durchgeführt.

Die vorstehend erwähnte "zur vollständigen Hydrolyse stöchiometrisch erforderliche Menge Wasser" kann bei der Vorkondensation durchaus mehr als 100 Mol% betragen. Da nämlich für vollständige Hydrolyse und einen zeitlich vernünftigen vollständigen Ablauf der Kondensationsreaktion, je nach Hydrolyseneigung der Monomeren und Temperatur, der Einsatz überstöchiometrischer Wassermengen angezeigt sein kann, bedeutet die Anwendung der genannten theoretischen Maximalkonzentration in bestimmten Fällen noch keineswegs, daß die Phase der Vorkondensation rasch durchlaufen bzw. übersprungen wird. In den meisten Fällen wird jedoch das Hydrolysemittel zur Vorkondensation in Mengen eingesetzt, die unterhalb der zu vollständiger Hydrolyse und Kondensation theoretisch notwendigen Mindestmenge liegt.

Nach einem anderen erfindungsgemäßen Verfahren werden Block-Copolykondensate erhalten, bei denen eine Bildung von Blöcken gleicher Einheiten nach Formel (I) und (II) und gegebenenfalls einer oder mehrerer Einheiten nach Formel (IV) vorliegt. Dieses Verfahren sieht vor, ein tertiäres Aminoorganosilan der allgemeinen Formel (V) und ein organofunktionelles Silan der Formel (VI), wobei R⁷ bis R¹¹ ebenso wie X den bereits genannten Bedeutungsumfang haben, und gegebenenfalls einen oder mehrere Vernetzer der allgemeinen Formel 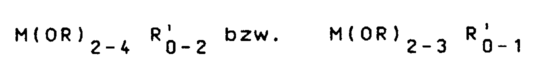
wobei M, R und R' gleichfalls den bereits genannten Bedeutungsumfang haben, jeweils voneinander unabhängig, 5 Minuten bis 72 Stunden ohne oder unter Verwendung eines Lösungsmittels, in Gegenwart von 1 bis 100, bevorzugt 1 bis 50 Mol% der jeweils zur vollständigen Hydrolyse stöchiometrisch erforderlichen Menge Wasser, bei Raumtemperatur bis 200° C vorzukondensieren, dann die Vorkondensate zu vereinigen und dann nach Zusatz weiteren Wassers und gegebenenfalls weiteren Lösungsmittels, (so daß mindestens die für eine vollständige Hydrolyse und Polykondensation erforderliche Menge Wasser anwesend ist) die vollständige Hydrolyse und Polykondensation wie bereits beschrieben durchzuführen. Natürlich kann auch bei dieser Herstellungsvariante das gesamte Reaktionsgemisch nach dem Geliervorgang zu einer festen Masse erstarren. Dann ist es auch angebracht, eine entsprechende Menge weiteren Lösungsmittels oder Wassers zur Verdünnung zuzusetzen.

Die Vorkondensation kann durch den Zusatz einer geringen Menge eines bevorzugt basischen Kondensationskatalysators, wie z. B. Ammoniak, oder aber auch einer geeigneten Zinnverbindung beschleunigt werden. Die Menge Wasser, die zur Vorkondensation verwendet wird, hängt davon ab, welcher Oligomerisierungsgrad, d. h. welche Blockgröße erreicht werden soll. Bei Einsatz von mehr Wasser zur Vorkondensation entstehen natürlich größere Einheiten als bei Verwendung von weniger Wasser. Die Dauer der Vorkondensation hängt, wie bereits vorstehend erörtert, generell von der Hydrolysebereitschaft der monomeren Komponenten und der Temperatur ab.

Nach einem weiteren erfindungsgemäßen Verfahren werden sog. gemischte Copolykondensate erhalten, bei denen teilweise eine Bildung von Blöcken gleicher Einheiten nach Formel (I) und/oder Formel (II) und/oder einer oder mehrerer Einheiten nach Formel (IV) vorliegt, bei denen stets jedoch mindestens eine monomere Komponente nicht vorkondensiert und mindestens eine monomere Komponente vorkondensiert wird. Dieses Verfahren sieht vor, daß man nur eines der einzusetzenden Monomeren der Formeln (V), (VI) und (VIII) von Anspruch 5 (VIII sind gegebenenfalls vorgesehene Vernetzer der allgemeinen Formel 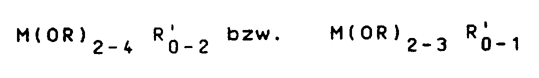
wobei M, R und R' den bereits genannten Bedeutungsumfang haben) voneinander unabhängig 5 Minuten bis 72 Stunden ohne oder unter Verwendung eines Lösungsmittels (nach Anspruch 6), in Gegenwart von 1 bis 100 Mol% der zur vollständigen Hydrolyse stöchiometrisch erforderlichen Menge Wasser, bei Raumtemperatur bis 200° C, gegebenenfalls unter Zusatz eines Kondensationskatalysators, vorkondensiert, dann das(die) Vorkondensat(e) mit der(n) nicht kondensierten Komponente(n) vereinigt und dann zur Vervollständigung von Hydrolyse und Polykondensation der Gesamtmischung nach Zusatz weiteren Wassers und gegebenenfalls weiteren Lösungsmittels weiter wie nach Anspruch 5 verfährt. Die weitere Behandlung des dabei gebildeten Polykondensates gestaltet sich dann wie bei den anderen beschriebenen Verfahren.

Charakterisiert sind die neuen Organosiloxanamin-Copolykondensate insbesondere anhand der quantitativen Hydrolyseausbeuten, der Elementaranalysen und durch die Bestimmung der einzelnen Funktionalitäten.

Zwischen den nach den unterschiedlichen Herstellungsverfahren erhaltenen Copolykondensaten besteht rein optisch kein Unterschied. Je nach Vorbehandlung besitzen die erfindungsgemäßen Copolykondensate Oberflächen von 0,1 bis 1000 m²/g und Teilchengrößendurchmesser von ca. 1 cm bis 1µm. Ein bevorzugter Teilchengrößenbereich ist dabei ohne weiteres einstellbar.

Die Zersetzungspunkte für die Copolykondensate hängen natürlich von den gegebenen einzelnen Funktionalitäten ab. Generell liegen sie jedoch an der Luft bei deutlich über 100° C und unter Schutzgasatmosphäre bei über 150°C Neben der generellen Verwendbarkeit der Copolykondensate als Wirkstoffträger im breitesten Sinne besteht ein besonderer Gegenstand der Erfindung in der Verwendung von Copolykondensaten, in denen X für die komplexierenden Gruppen 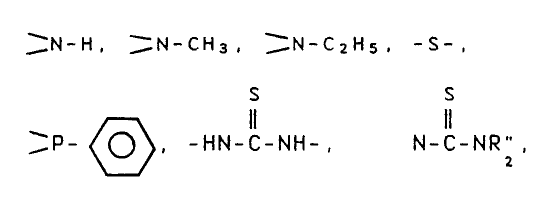
steht, wobei R" denselben Bedeutungsumfang wie in Anspruch 1 hat, zur Entfernung von gelösten Metallen aus einer flüssigen wäßrigen oder organischen Phase nach dem statischen oder dynamischen Prinzip.

Ein weiterer besonderer Gegenstand der Erfindung besteht in der Verwendung der Copolykondensate zur adsorptiven Bindung von gasförmigen organischen Verbindungen, vorzugsweise organischen Lösungsmitteln und von Wasserdampf. Entscheidend für diese Fähigkeit zur Adsorption ist vor allem das spezifische Porenvolumen, der Porendurchmesser und die Oberflächeneigenschaften. Diese Faktoren können einerseits über die erfindungsgemäßen Herstellungs- und Nachbehandlungsverfahren und andererseits auch über die chemische Zusammensetzung, z. B. durch Einbau hydrophobierend wirkender Vernetzergruppen in das Polysiloxangerüst, beeinflußt werden. Die Rückgewinnung der adsorbierten organischen Verbindungen oder des Wassers ist durch Temperaturerhöhung und/oder durch Begasen mit erwärmter Luft ohne weiteres möglich.

Die Erfindung wird nachfolgend anhand von Ausführungsbeispielen weiter erläutert.

### Beispiel 1

385,8 g (0,90 Mol) HN[(CH₂)₃Si(OC₂H₅)₃]₂ und 114,2 g (0,18 Mol) N[(CH₂)₃Si(OC₂H₅)₃]₃ wurden in 500 ml Ethanol vereinigt. Die Lösung wurde auf 60° C aufgeheizt und unter Rühren wurden 150 ml entsalztes Wasser zugesetzt. Die Lösung wurde weiter bei 60° C gerührt, bis nach 5 Minuten die Gelierung einsetzte. Kurz nach dem Einsetzen der Gelierung wurden 500 ml Ethanol zur Verdünnung zugesetzt und die Suspension auf Rückflußtemperatur aufgeheizt. Es wurde 2 Stunden unter Rückfluß gerührt, dann die Suspension abgekühlt, der gebildete Feststoff von der flüssigen Phase abfiltriert und 2 mal mit je 500 ml Ethanol gewaschen. Nach insgesamt 24-stündiger Trocknung bei 120° C unter Schutzgasatmosphäre wurden 237,0 g (99 % d. Theorie) Produkt, bestehend aus Polymereinheiten der Formel

HN[(CH₂)₃SiO_{3/2}]₂ · 0,2N[(CH₂)₃SiO_{3/2}]₃

erhalten.

| Analysen | % C | % H | % N | % Si |
|---|---|---|---|---|
| Theorie: | 35,7 | 6,4 | 6,4 | 27,8 |
| Gefunden: | 34,9 | 6,5 | 6,2 | 27,2 |
| Spezifische Oberfläche: 577 m²/g | | | | |

### Beispiel 2

76,9 g (0,18 Mol) (C₆H₅)P[(CH₂)₃Si(OCH₃)₃]₂ und 223,1 g (0,35 Mol) N[(CH₂)₃Si(OC₂H₅)₃]₃ wurden in 300 ml Ethanol vereinigt. Die Mischung wurde in einem 3-Halskolben mit Rückflußkühler und KPG-Rührer auf Rückflußtemperatur aufgeheizt und mit 100 ml H₂O versetzt. Es wurde 15 Minuten unter Rückfluß gerührt, dann auf 50° C abgekühlt. Nach 45 Minuten langsamem Rühren bei 50° C setzte die Gelierung ein. 5 Minuten nach dem Einsetzen der Gelierung wurden 500 ml Ethanol zur Verdünnung zugesetzt und dann die Suspension in einen 2 l-Stahlautoklaven mit Flügelrührer überführt. Mit 300 U/min. wurde die Suspension im verschlossenen Autoklaven über einen Zeitraum von 24 Stunden bei 150° C gerührt. Anschließend wurde die Suspension auf ein Druckfilter überführt und 2 mal mit je 500 ml Ethanol gewaschen. Nach 12-stündiger Trocknung bei 130° C unter Schutzgasatmosphäre wurden 153,0 g (98,5 % d. Theorie) polymeres Produkt, bestehend aus Polymereinheiten der Formel

N[(CH₂)₃SiO_{3/2}]₃ · 0,5(C₆H₅)P[(CH₂)₃SiO_{3/2}]₂

erhalten.

| Analysen: | % C | % H | % N | % P | % Si |
|---|---|---|---|---|---|
| Theorie: | 40,5 | 6,0 | 3,1 | 6,9 | 25,3 |
| Gefunden: | 39,8 | 6,1 | 3,0 | 6,7 | 25,0 |
| Spezifische Oberfläche: 452 m²/g | | | | | |

### Beispiel 3

912,1 g (2,06 Mol) S[(CH₂)₃Si(OC₂H₅)₃]₂ wurden mit 500 ml Ethanol versetzt und in einer 10 l-Quickfitapparatur mit Rührer und Rückflußkühler auf Rückflußtemperatur aufgeheizt. Nach dem Erreichen von Rückflußtemperatur wurden der Mischung 45 ml entsalztes Wasser zugesetzt. Es wurde zunächst 1 Stunde unter Rückfluß gerührt und dann 260,0 g (0,41 Mol) N[(CH₂)₃Si(OC₂H₅)₃]₃, 429,2 g (2,06 Mol) Si(OC₂H₅)₄, 1200 ml Ethanol und weitere 450 ml (0,41 Mol) Wasser zugesetzt. Es wurde weitere 30 Minuten unter Rückfluß gerührt, dann auf 70° C abgekühlt und langsam weitergerührt. 30 Minuten nach dem Erreichen von 70° C setzte die Gelierung ein. Der gelierten Mischung wurde zur Verdünnung 1 l entsalztes Wasser zugesetzt. Es wurde noch 1 Stunde unter Rückfluß gerührt, dann die Reaktionsmischung abgekühlt, der Feststoff von der flüssigen Phase abfiltriert und mit insgesamt 2 l Wasser gewaschen. Nach 10-stündiger Trocknung bei 130° C und 12-stündiger Temperung bei 160° C unter N-Atmosphäre wurden 690,4 g (98,6 % d. Theorie) eines gemäß der Beschreibung gemischten Copolykondensates, bestehend aus Einheiten der Formel

0,2 N[(CH₂)₃SiO_{3/2}]₃ · S[(CH₂)₃SiO_{3/2}]₂ · SiO₂

erhalten. Das Produkt wurde anschließend in eine Kugelmühle überführt und solange gemahlen, bis alle Partikel eine Korngröße von kleiner als 0,1 mm hatten.

| Analysen: | % C | % H | % N | % S | % Si |
|---|---|---|---|---|---|
| Theorie: | 27,6 | 4,6 | 0,8 | 9,4 | 21,5 |
| Gefunden: | 26,8 | 4,4 | 0,9 | 9,2 | 21,0 |

### Beispiel 4

280,1 g (0,66 Mol) HN[(CH₂)₃Si(OC₂H₅)₃]₂, 82,9 g (0,13 Mol] N[(CH₂)₃Si(OC₂H₅)₃]₃, 137,1 g (0,66 Mol) Si(OC₂H₅)₄ und 195,7 (1,32 Mol) (CH₃)₂Si(OC₂H₅)₂ wurden in 700 ml Ethanol vereinigt. In einem 6 l-Glasgefäß mit Rührer, Rückflußkühler und Tropftrichter wurde die Mischung auf Rückflußtemperatur aufgeheizt und beim Erreichen dieser Temperatur mit 200 ml Wasser versetzt. Die klare Lösung wurde weiter refluxiert, wobei nach ca. 15 Minuten die Gelierung einsetzte. Nach Zugabe von 1 l Ethanol wurde unter kräftigem Rühren noch 1 Stunde refluxiert, dann abgekühlt und weiter wie nach Beispiel 1 verfahren. Erhalten wurden 306,8 g (98,7 % d. Theorie) polymeres Produkt, bestehend aus Polymereinheiten der Formel

0,2 N[(CH₂)₃SiO_{3/2}]₃·HN[(CH₂)₃SiO_{3/2}]₂·SiO₂ · 2(CH₃)₂SiO_{2/2}

| Analysen: | % C | % H | % N | % Si |
|---|---|---|---|---|
| Theorie: | 30,1 | 6,1 | 3,6 | 33,4 |
| Gefunden: | 29,4 | 5,8 | 3,4 | 32,2 |
| Spezifische Oberfläche: 328 m²/g | | | | |

### Beispiel 5

78,8 g (0,125 Mol) N[(CH₂)₃Si(OC₂H₅)₃]₃ wurden in einem 250 ml 3-Halskolben mit KPG-Rührer und Rückflußkühler mit 5 ml Wasser versetzt und 1 Stunde bei 80° C gerührt. Parallel dazu wurden 121,2 g (0,25 Mol) des Thioharnstoffderivates 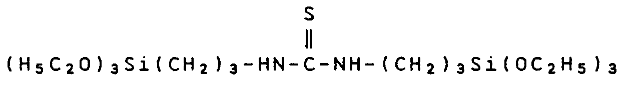
ebenfalls in einem 250 ml Kolben mit 5 ml Wasser versetzt und gleichfalls 1 Stunde bei 80 °C gerührt. Nach Ablauf dieser Zeit wurden die beiden Vorkondensate in insgesamt 200 ml Ethanol gelöst, in einen 2 l-Dreihalskolben mit Rührer und Rückflußkühler überführt und nach Zusatz von weiteren 50 ml Wasser erneut unter Rückfluß gerührt, bis nach ca. 20 Minuten die Gelierung einsetzte. Die Suspension wurde mit 300 ml Ethanol verdünnt eine weitere Stunde unter Rückfluß gerührt und dann analog zu Beispiel 1 aufgearbeitet. Es wurden 100,2 g (97,6 % d. Theorie) des Block-Copolykondensates, bestehend aus Einheiten der Formel

0,5N[(CH₂)₃SiO_{3/2}]₃ · S=C[NH-(CH₂)₃-SiO_{3/2}]₂

erhalten.

| Analysen: | % C | % H | % N | % S | % Si |
|---|---|---|---|---|---|
| Theorie: | 33,6 | 5,6 | 8,3 | 7,8 | 23,9 |
| Gefunden: | 33,4 | 5,7 | 8,4 | 8,0 | 22,8 |
| Spezifische Oberfläche: 625 m²/g | | | | | |

### Beispiel 6

Ausgehend von 78,8 g (0,125 Mol) N[(CH₂)₃Si(OC₂H₅)₃]₃ und 121,2 g (0,25 Mol) 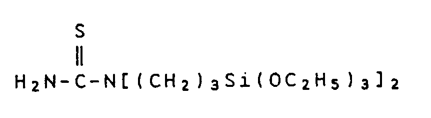
wurden analog zu Beispiel 5 101,3 g eines Block-Copolykondensates, bestehend aus Einheiten der Formel 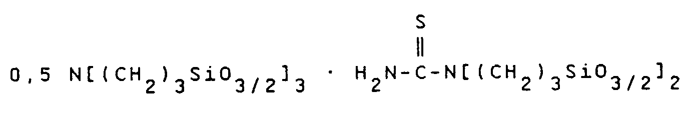
erhalten.

| Analysen: | % C | % H | % N | % S | % Si |
|---|---|---|---|---|---|
| Theorie: | 33,6 | 5,6 | 8,3 | 7,8 | 23,9 |
| Gefunden: | 33,0 | 5,7 | 8,1 | 7,5 | 23,2 |
| Spezifische Oberfläche: 570 m²/g | | | | | |

### Beispiel 7

1007,6 g (2,0 Mol) N[(CH₂)₃Si(OCH₃)₃]₃, 769,2 g (2,0 Mol) 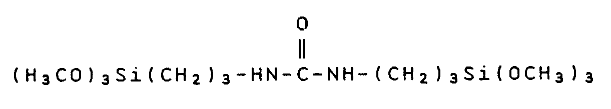
und 528,9 g (2,0 Mol) Si(OC₃H₇]₄ wurden unter 1-stündiger Vorkondensation des in 500 ml Ethanol gelösten Aminosilans mit 45 ml Wasser und anschließender gemeinsamer Hydrolyse und Polykondensation in 2 l Ethanol unter Einsatz von 600 ml Wasser (2 l Wasser zur Verdünnung) analog zu Beispiel 3 umgesetzt. Nach Aufarbeitung analog zu Beispiel 3 wurden 1195,0 g (99.1 % d. Theorie) polymeres Produkt, bestehend aus Einheiten der Formel

N[(CH₂)₃SiO_{3/2}]₃ · O=C[NH-(CH₂)₃-SiO_{3/2}]₂ · SiO₂

erhalten.

| Analysen: | % C | % H | % N | % Si |
|---|---|---|---|---|
| Theorie: | 31,9 | 5,3 | 7,0 | 27,9 |
| Gefunden: | 30,4 | 5,2 | 6,6 | 27,0 |

### Beispiel 8

Ausgehend von 78,8 g (0,125 Mol) N[(CH₂)₃Si(OC₂H₅)₃]₃ und 118,7 g (0,25 Mol) eines Isomerengemisches der Formel 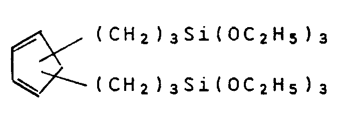
wurden analog zu Beispiel 5 97,2 g (97,0 % d.Theorie) eines Block-Copolykondensates, bestehend aus Einheiten der Formel

0,5N[(CH₂)₃SiO_{3/2}]₃ · C₅H₄[(CH₂)₃SiO_{3/2}]₂

erhalten.

| Analysen: | % C | % H | % N | % Si |
|---|---|---|---|---|
| Theorie: | 46,5 | 6,3 | 1,7 | 24,5 |
| Gefunden: | 46,1 | 6,0 | 1,4 | 23,9 |
| Spezifische Oberfläche: 228 m²/g | | | | |

### Beispiel 9

50,4 g (0,1 Mol) N[(CH₂)₃Si(OCH₃)₃]₃ und 107,6 g (0,2 Mol) HN[(CH₂)₁₀Si(OCH₃)₃]₂ wurden vereinigt und nach Zusatz von 5 ml Wasser 3 Stunden bei 60° C unter Rühren vorkondensiert. Anschließend wurde die Mischung mit 200 ml Isopropanol und mit weiteren 40 ml Wasser versetzt.

Die Lösung wurde anschließend solange unter Rückfluß gerührt, bis die Gelierung einsetzte. Nach Zusatz von weiteren 100 ml Isopropanol wurde die Suspension in einen Autoklaven überführt und noch 12 Stunden bei 160°C gerührt. Nach Aufarbeitung analog zu Beispiel 2 wurden 104,0 g (95,0 % d. Theorie) polymeres Produkt bestehend aus Polymereinheiten der Formel

0,5 N[(CH₂)₃SiO_{3/2}]₃ · HN[(CH₂)₁₀SiO_{3/2}]₂

erhalten.

| Analysen: | % C | % H | % N | % Si |
|---|---|---|---|---|
| Theorie: | 53,8 | 9,0 | 3,8 | 18,0 |
| Gefunden: | 52,9 | 8,9 | 3,7 | 17,5 |
| Spezifische Oberfläche: 58 m²/g | | | | |

### Beispiel 10

644,1 g (1,0 Mol) 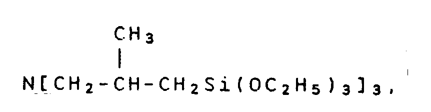
59,9 g (0,1 Mol) 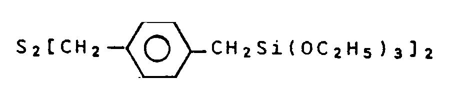
und 24,6 g (0,1 Mol) Al(OC₄H₉)₃ wurden analog zu Beispiel 9 vorkondensiert und weiter umgesetzt. Erhalten wurden 343,7 g (97,3 % d. Theorie) polymeres Produkt, bestehend aus Polymereinheiten der Formel

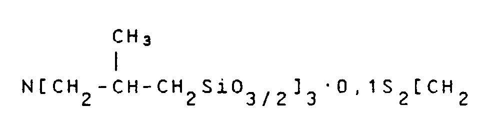

CH₂SiO_{3/2}]₂·0,1AlO_{3/2}

erhalten.

| Analysen: | % C | % H | % N | % S | % Si | % Al |
|---|---|---|---|---|---|---|
| Theorie: | 46,2 | 7,3 | 4,0 | 1,8 | 25,4 | 0,8 |
| Gefunden: | 47,0 | 7,5 | 4,2 | 1,7 | 24,7 | 0,7 |

### Beispiel 11

Ausgehend von 71,4 g (0,1 Mol) N[(CH₂)₅Si(OC₂H₅)₃]₃, 42,9 g (0.1 Mol) S=C[NH-CH₂-Si(OC₂H₅)₃]₂, 21,1 g (0,1 Mol) (C₂H₅)Ti(OC₂H₅)₃ sowie 208,3 g (1,0 Mol) Si(OC₂H₅)₄ wurden analog zu Beispiel 9 unter Verwendung von Ethanol als Lösungsmittel 126,3 g (98,0 % d. Theorie) polymeres Produkt, bestehend aus Polymereinheiten der Formel

N[(CH₂)₅SiO_{3/2}]₃·S=C[NH-CH₂-SiO_{3/2}]₂·(C₂H₅)TiO_{3/2}·10SiO₂

erhalten.

| Analysen: | % C | % H | % N | % S | % Ti | % Si |
|---|---|---|---|---|---|---|
| Theorie: | 18,6 | 3,2 | 3,3 | 2,5 | 3,7 | 32,7 |
| Gefunden: | 18,0 | 3,0 | 3,1 | 2,2 | 3,6 | 32,0 |
| Spezifische Oberfläche: 97 m²/g | | | | | | |

### Beispiel 12

Ausgehend von 63,0 g (0,1 Mol) N[(CH₂)₃Si(OC₂H₅)₃]₃, 44,3 g (0,1 Mol) S[(CH₂)₃Si(OC₂H₅)₃]₂, 3,8 g (0,01 Mol) Zr(OC₄H₉)₄ und 2,7 g (0,01 Mol) (C₆H₅)₂Si(OC₂H₅)₂ wurden analog zu Beispiel 9 unter Verwendung von Ethanol als Lösungsmittel 53,8 g (98,0 % d. Theorie) polymeres Produkt, bestehend aus Polymereinheiten der Formel

N[(CH₂)₃SiO_{3/2}]₃·S[(CH₂)₃SiO_{3/2}]₂ · 0,1ZrO₂ · 0,1(C₆H₅)₂SiO_{2/2}

mit angenähert stöchiometrischer Zusammensetzung erhalten.

### Beispiel 13

5 g des nach Beispiel 2 hergestellten Copolykondensates wurden in 50 ml Wasser suspendiert, in dem 50 mg Rhodium gelöst waren. Die Suspension wurde 2 Stunden bei 80° C gerührt und dann der Feststoff abfiltriert. Eine Analyse des Filtrats ergab jetzt einen Rh-Gehalt von 0,5 ppm.

### Beispiel 14

5 g des nach Beispiel 5 hergestellten Copolykondensates wurden in 50 ml Wasser suspendiert, in dem 100 mg Palladium gelöst waren. Die Suspension wurde 2 Stunden bei Raumtemperatur gerührt und dann der Feststoff abfiltriert. Eine Analyse des Filtrats ergab jetzt einen Pd-Gehalt von 0,1 ppm.

### Beispiel 15

Ein analoger Versuch wie in Beispiel 13 unter Einsatz des nach Beispiel 3 hergestellten Copolykondensates ergab einen Rest-Pd-Gehalt von 0,1 ppm.

### Beispiel 16

5 g des in Beispiel 1 hergestellten Copolykondensates wurden in einer Waschflasche vorgelegt. Die Waschflasche wurde in einem Schrank auf 20° C thermostatisiert und mit einem Luftstrom von 100 l/h beschickt, der mit einem Zehntel des Sättigungswertes an m-Xylol beladen war. Durch regelmäßige Kontrolle der Gewichtszunahme des Polymers wurde die m-Xylol-Aufnahme überwacht. Im Gleichgewichtszustand wurde eine Gewichtszunahme von rund 50 % festgestellt.

### Beispiel 17

Ein analoger Versuch zu Beispiel 15 unter Einsatz des in Beispiel 4 hergestellten Copolykondensates und unter Verwendung von Trichlorethan anstelle von m-Xylol ergab eine Gewichtszunahme von 60 %.

## Patentansprüche

1. Organosiloxanamin-Copolykondensate, die aus Einheiten der Formel 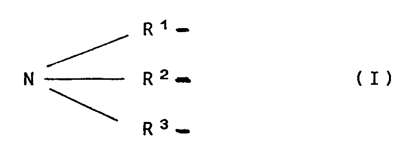 und aus Einheiten der Formel 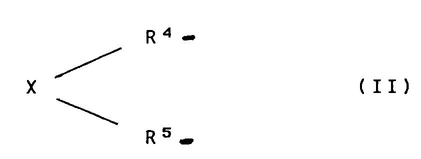 bestehen, in welchen R¹ bis R⁵ gleich oder verschieden sind und eine Gruppe der allgemeinen oder verschieden sind und eine Gruppe der Formel 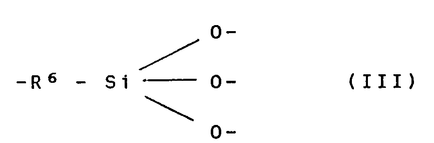 bedeuten, wobei R⁶ direkt an das Stickstoffatom bzw. den zweibindigen Rest X gebunden ist und eine lineare oder verzweigte Alkylengruppe mit 1 - 10 C-Atomen,
eine Cycloalkylengruppe mit 5 bis 8 C-Atomen oder eine Einheit der allgemeinen Formel 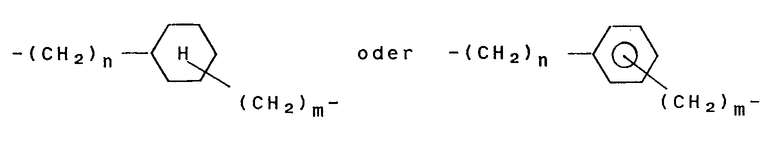 darstellt, in der n eine Zahl von 1 bis 6 ist und die Zahl stickstoffständiger bzw. X-ständiger Methylengruppen angibt und m eine Zahl von 0 bis 6 ist,
wobei die freien Valenzen der an das siliciumatom gebundenen Sauerstoffatome wie bei Kieselsäuregerüsten durch siliciumatome weiterer Gruppen der Formel (III) und/oder über die Metallatome in einem oder mehreren vernetzenden Brückengliedern der folgenden allgemeinen Formeln (IV) 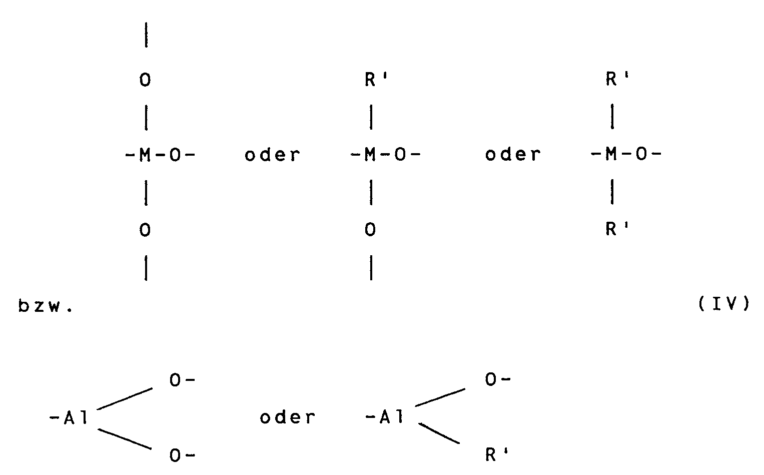 abgesättigt sind, M ein silicium-, Titan- oder zirkoniumatom und R' eine lineare oder verzweigte Alkylgruppe mit 1 bis 5 C-Atomen oder eine Phenylgruppe ist und das Verhältnis der Siliciumatome aus den Gruppen der allgemeinen Formel (III) zu den Metallatomen in den Brückengliedern der allgemeinen Formeln (IV) 1 : 0 bis 1 : 10 beträgt,
X in Formel (II) für 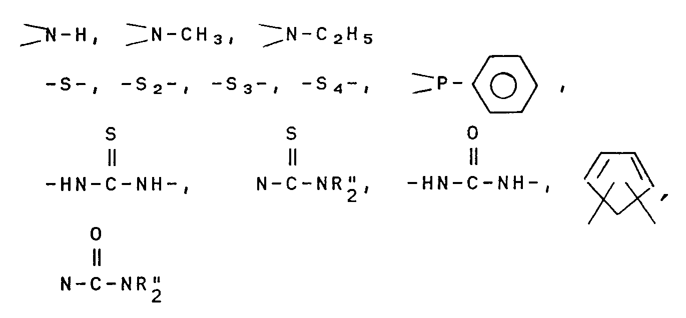 steht, wobei R" gleich H oder eine lineare oder verzweigte Alkylgruppe mit 1 bis 5 C-Atomen bedeutet, und bei denen das Verhältnis von Einheiten nach Formel (I) zu Einheiten nach Formel (II) von 0,01 : 99,99 bis 99,99 : 0,01 Mol%, vorzugsweise 5 : 95 bis 95 : 5 Mol% beträgt.

2. Organosiloxanamin-Copolykondensate gemäß Anspruch 1,
**dadurch gekennzeichnet,**
daß sie als sog. statistische Copolykondensate, Block-Copolykondensate oder als Gemische aus diesen Formen vorliegen.

3. Organosiloxanamin-Copolykondensate gemäß Ansprüchen 1 und 2,
**dadurch gekennzeichnet,**
daß R¹ bis R⁵ für eine Gruppe der allgemeinen Formel 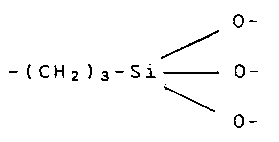 stehen.

4. Verfahren zur Herstellung von statistischen Organosiloxan-Copolykondensaten gemäß Ansprüchen 1 bis 3,
**dadurch gekennzeichnet,**
daß man ein tertiäres Aminoorganosilan der allgemeinen Formel 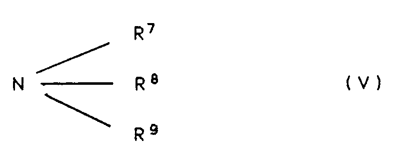 zusammen mit einem organofunktionellen Silan 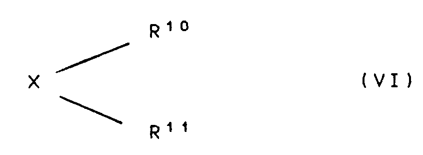 entsprechend der gewünschten stöchiometrischen Zusammensetzung des herzustellenden Copolykondensates, wobei R⁷ bis R¹¹ gleich oder verschieden sind und eine Gruppe der allgemeinen Formel
R⁶-Si(OR¹²)₃ (VII)
bedeuten,
R⁶ dieselbe Bedeutung wie in Formel (III) hat,
R¹² eine lineare oder verzweigte Alkylgruppe mit 1 bis 5 C-Atomen bedeutet und
X dieselbe Bedeutung wie in Formel (II) hat,
gegebenenfalls nach Zusatz eines oder mehrerer Vernetzer der allgemeinen Formel 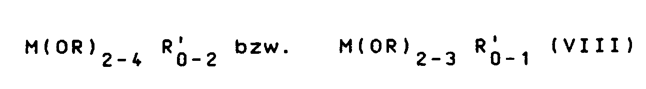 wobei M ein Silicium-, Titan-, Zirkon- oder Aluminiumatom,
R' eine lineare oder verzweigte Alkylgruppe mit 1 bis 5 C-Atomen oder eine Phenylgruppe ist und R eine lineare oder verzweigte Alkylgruppe mit 1 bis 5 C-Atomen bedeutet und das Verhältnis der Siliciumatome aus den Gruppen der allgemeinen Formel (VII) zu den Metallatomen in den Brückengliedern 1 : 0 bis 1 : 10 beträgt,
in einem, weitgehend wassermischbaren, aber Aminoorganosilan nach Formel (V) und organofunktionelles Silan nach Formel (VI) sowie Vernetzer lösenden Lösungsmittel auflöst und der Lösung unter Rühren eine zumindest für die vollständige Hydrolyse und Kondensation ausreichende Menge Wasser zufügt, dann das Reaktionsgemisch unter Weiterrühren bei einer bestimmten Temperatur im Bereich von Raumtemperatur bis 200° C geliert, den sich bildenden Feststoff, gegebenenfalls nach Zusatz von weiterem Lösungsmittel oder Wasser, noch bis zu 48 h bei Raumtemperatur bis 200° C, bei Normaldruck oder einem Druck, welcher der Summe der Partialdrucke bei der jeweiligen Temperatur entspricht, rührt, dann das gebildete Copolykondensat nach gängigen Techniken von der flüssigen Phase abtrennt, gegebenenfalls wäscht, bei Raumtemperatur bis 250° C gegebenenfalls unter Schutzgasatmosphäre oder im Vakuum trocknet, gegebenenfalls anschließend 1 bis 100 Stunden bei Temperaturen von 150 bis 300° C unter Schutzgasatmosphäre oder im Vakuum tempert, gegebenenfalls mahlt und/oder klassifiziert.

5. Verfahren gemäß Anspruch 4,
**dadurch gekennzeichnet,**
daß als Lösungsmittel bei der Hydrolyse allein oder in Mischung Methanol, Ethanol, n- und i-Propanol, n- und i-Butanol oder n-Pentanol verwendet wird.

6. Verfahren nach Anspruch 4 oder 5,
**dadurch gekennzeichnet,**
daß man die Hydrolyse mit Wasserüberschuß durchführt.

7. Verfahren nach den Ansprüchen 4 bis 6,
**dadurch gekennzeichnet,**
daß man die monomeren Komponenten nach Formel (V) und (VI) und der oder die gegebenenfalls vorhandenen Vernetzer zusammen 5 Minuten bis 72 Stunden ohne oder unter Verwendung eines Lösungsmittels (nach Anspruch 5), in Gegenwart von 1 bis 100 Mol% der zur vollständigen Hydrolyse stöchiometrisch erforderlichen Menge Wasser, bei Raumtemperatur bis 200° C, gegebenenfalls unter Zusatz eines Kondensationskatalysators vorkondensiert und dann nach Zusatz weiteren Wassers und gegebenenfalls weiteren Lösungsmittels weiter wie nach Anspruch 4 verfährt.

8. Verfahren zur Herstellung von Block-Copolykondensaten gemäß den Ansprüchen 1 bis 3,
**dadurch gekennzeichnet,**
daß man die monomeren Komponenten nach Formel (V) und (VI) von Anspruch 4 und der oder die gegebenenfalls vorhandenen Vernetzer jeweils unabhängig voneinander 5 Minuten bis 72 Stunden ohne oder unter Verwendung eines Lösungsmittels (nach Anspruch 5), in Gegenwart von 1 bis 100 Mol% der jeweils zur vollständigen Hydrolyse stöchiometrisch erforderlichen Menge Wasser, bei Raumtemperatur bis 200° C, gegebenenfalls unter Zusatz eines Kondensationskatalysators, vorkondensiert, dann die Vorkondensate vereinigt und dann nach Zusatz weiteren Wassers und gegebenenfalls weiteren Lösungsmittels weiter wie nach Anspruch 4 verfährt.

9. Verfahren zur Herstellung von gemischten Copolykondensaten gemäß den Ansprüchen 1 bis 3
**dadurch gekennzeichnet,**
daß man nur einen Teil der einzusetzenden Monomeren der Formeln (V), (VI) und (VIII) von Anspruch 4 voneinander unabhängig 5 Minuten bis 72 Stunden ohne oder unter Verwendung eines Lösungsmittels (nach Anspruch 5), in Gegenwart von 1 bis 100 Mol% der zur vollständigen Hydrolyse stöchiometrisch erforderlichen Menge Wasser, bei Raumtemperatur bis 200° C, gegebenenfalls unter Zusatz eines Kondensationskatalysators, vorkondensiert, dann das(die) Vorkondensat(e) mit der(n) nicht vorkondensierten Komponente(n) vereinigt und dann nach Zusatz weiteren Wassers und gegebenenfalls weiteren Lösungsmittels weiter wie nach Anspruch 4 verfährt.

10. Verwendung der erfindungsgemäßen Copolykondensate gemäß Anspruch 1 bis 3, bei denen X für 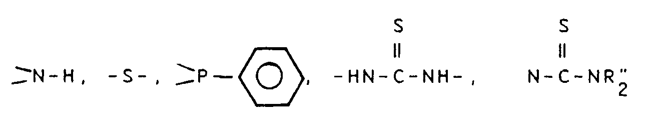 steht, wobei R" denselben Bedeutungsumfang wie in Anspruch 1 hat, zur Entfernung von gelösten Metallen aus flüssiger, wäßriger oder organischer Phase.

11. Verwendung der erfindungsgemäßen Copolykondensate gemäß Anspruch 1 bis 3 zur Adsorption von gasförmigen organischen Verbindungen und von Wasserdampf, vorzugsweise von organischen Lösungsmitteln.

## Claims

1. Organosiloxanamine copolycondensates characterised in that they consist of units of the formula 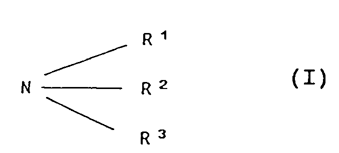 and of units of the formula 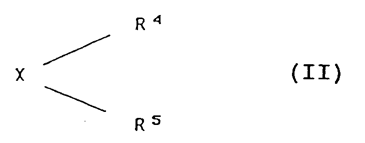 in which R¹ to R⁵ are identical or different and represent a group of the general formula 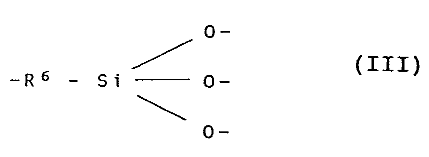 wherein R⁶ is bonded directly to the nitrogen atom or the bivalent group X and represents a linear or branched alkylene group with 1 - 10 carbon atoms,
a cycloalkylene group with 5 to 8 carbon atoms or a unit of the general formula 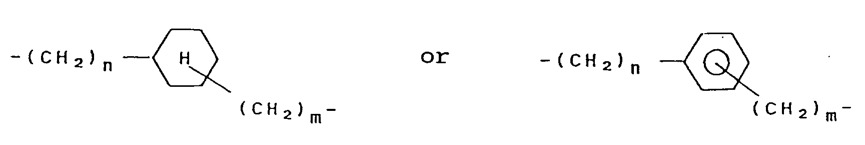 in which n is a number from 1 to 6 and gives the number of methylene groups adjacent to nitrogen or to X and m is a number from 0 to 6,
wherein the free valencies on the oxygen atoms bonded to the silicon atom, as in a silicic acid lattice, are saturated by silicon atoms from other groups of the formula (III) and/or via the metal atoms in one or more cross-linking bridging members of the following general formulas (IV) 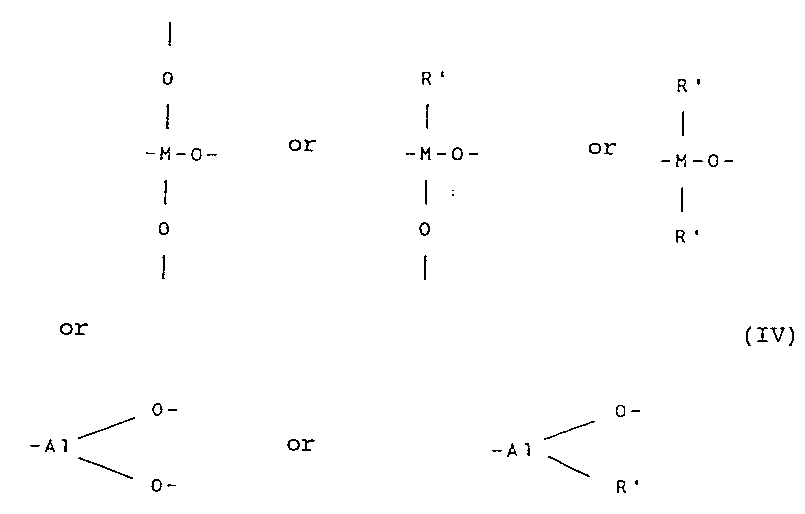 M is a silicon, titanium or zirconium atom and R' is a linear or branched alkyl group with 1 to 5 carbon atoms or a phenyl group and the ratio of silicon atoms from groups of the general formula (III) to metal atoms in the bridging members of the general formulas (IV) is 1 : 0 to 1 : 10,
X in formula (II) represents 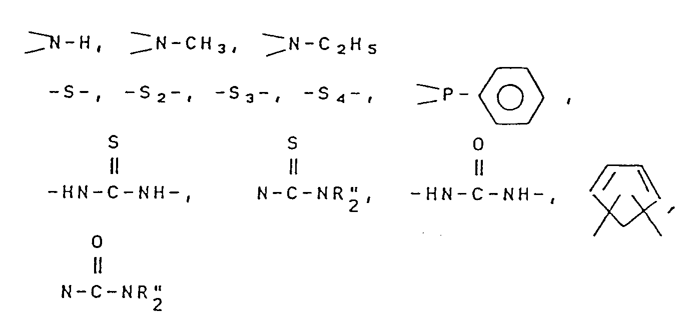 wherein R" is H or represents a linear or branched alkyl group with 1 to 5 carbon atoms, and in which the ratio of units with formula (I) to units with formula (II) is 0.01 : 99.99 to 99.99 : 0.1 mol-%,
preferably 5 : 95 to 95 : 5 mol-%.

2. Organosiloxanamine copolycondensates according to Claim 1, characterised in that they are present as so-called random copolycondensates, block copolycondensates or as mixtures of these forms.

3. Organosiloxanamine copolycondensates according to Claims 1 and 2, characterised in that R¹ to R⁵ represent a group of the general formula

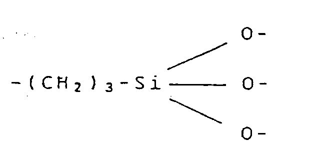

4. A process for the preparation of statistical organosiloxane copolycondensates according to Claims 1 to 3,
characterised in that a tertiary aminoorganosilane of the general formula 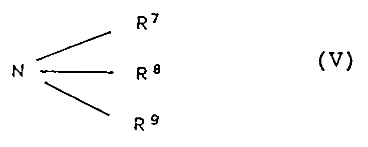 together with an organo-functional silane 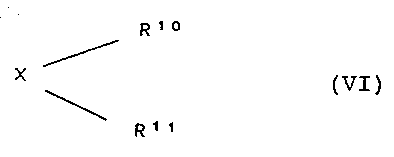 corresponding to the desired stoichiometric composition of the copolycondensate being prepared, wherein R⁷ to R¹¹ are identical or different and represent a group of the general formula
R⁶ - Si(OR¹²)₃ (VII)
R⁶ being defined as in formula (III),
R¹² representing a linear or branched alkyl group with 1 to 5 carbon atoms and
X being defined as in formula (II),
optionally after the addition of one or more cross-linkers of the general formula
M(OR)₂₋₄ R'₀₋₂ or M(OR)₂₋₃ R'₀₋₁ (VIII)
wherein M is a silicon, titanium, zirconium or aluminium atom,
R' is a linear or branched alkyl group with 1 to 5 carbon atoms or a phenyl group and R represents a linear or branched alkyl group with 1 to 5 carbon atoms and the ratio of silicon atoms from groups of the general formula (VII) to metal atoms in the bridging members is 1 : 0 to 1 : 10,
is dissolved in a solvent which is predominantly water-miscible, but dissolves aminoorganosilane of formula (V) and organo-functional silane of formula (VI) as well as cross-linkers and at least an adequate amount of water for complete hydrolysis and condensation is added to the solution with stirring, then the reaction mixture is gelled with further stirring at a specific temperature in the range from room temperature to 200°C, the solid being formed, optionally after the addition of further solvent or water, is stirred for a further up to 48 hours at room temperature to 200°C, at atmospheric pressure or at a pressure which corresponds to the sum of the partial pressures at the temperature concerned, then the copolycondensate which has formed is separated from the liquid phase using common techniques, optionally washed, dried at room temperature to 250°C optionally under a protective gas atmosphere or under vacuum, then optionally annealed for 1 to 100 hours at temperatures from 150 to 300°C under a protective gas atmosphere or under a vacuum, optionally milled and/or classified.

5. A process according to Claim 4,
characterised in that methanol, ethanol, n- and i-propanol, n- and i-butanol or n-pentanol is used as solvent for the hydrolysis, alone or in a mixture.

6. A process according to Claim 4 or 5,
characterised in that the hydrolysis is performed with excess water.

7. A process according to Claims 4 to 6,
characterised in that the monomeric components according to formula (V) and (VI) and the optionally present cross-linker(s) are precondensed together for 5 minutes to 72 hours with or without the use of a solvent (according to Claim 5), in the presence of 1 to 100 mol-% of the amount of water stoichiometrically required for complete hydrolysis, at room temperature to 200°C, optionally with the addition of a condensation catalyst and then, after the addition of further water and optionally further solvent, the further procedure is as in Claim 4.

8. A process for the preparation of block copolycondensates according to Claims 1 to 3,
characterised in that the monomeric components according to formula (V) and (VI) from Claim 4 and the optionally present cross-linker(s) are each precondensed independently of each other for 5 minutes to 72 hours with or without the use of a solvent (according to Claim 5), in the presence of 1 to 100 mol-% of the stoichiometrically required amount of water for complete hydrolysis, at room temperature to 200°C, optionally with the addition of a condensation catalyst, then the precondensates are combined and then, after the addition of further water and optionally further solvent, the further procedure is as in Claim 4.

9. A process for the preparation of mixed copolycondensates according to Claims 1 to 3,
characterised in that only some of the monomers of the formulas (V), (VI) and (VIII) from Claim 4 being used are precondensed independently of each other for 5 minutes to 72 hours with or without the use of a solvent (according to Claim 5), in the presence of 1 to 100 mol-% of the amount of water stoichiometrically required for complete hydrolysis, at room temperature to 200°C, optionally with the addition of a condensation catalyst, then the precondensate(s) are combined with the non-precondensed component(s) and then, after the addition of further water and optionally further solvent, the further procedure is as in Claim 4.

10. Use of the copolycondensates according to the invention according to Claim 1 to 3, in which X represents 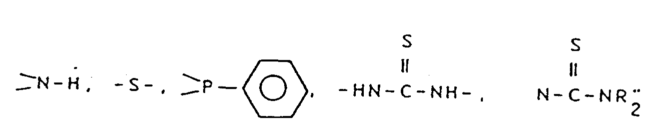 wherein R" is defined as in Claim 1, to remove dissolved metals from liquid, aqueous or organic phases.

11. Use of the copolycondensates according to the invention according to Claim 1 to 3 to adsorb gaseous organic compounds and water vapour, preferably organic solvents.

## Revendications

1. Copolycondensats organosiloxane-amine caractérisés en ce qu'ils sont constitués d'unités de formule : 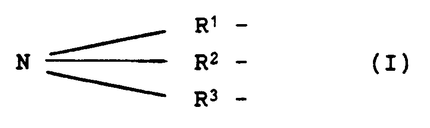 et d'unités de formule : 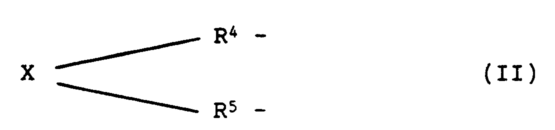 dans lesquelles les radicaux R¹ à R⁵ sont identiques ou différents et représentent un groupe de formule : 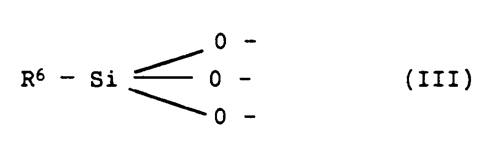 dans laquelle R⁶ est directement lié à l'atome d'azote ou au reste X à deux liaisons, et représente un groupe alkylène linéaire ou ramifié de 1 à 10 atomes de C, un groupe cycloalkylène de 5 à 8 atomes de C ou une unité de formule générale : 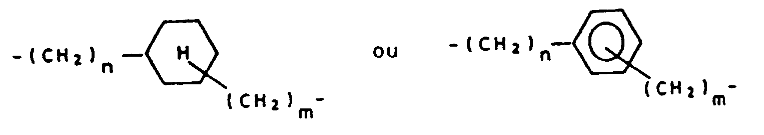 dans laquelle n est un nombre compris entre 1 et 6 et indique le nombre de groupes méthylène liés à l'azote ou à X, et m est un nombre compris entre 0 et 6, les valences libres des atomes d'oxygène liés à l'atome de silicium étant saturées comme dans le réseau de la silice par des atomes de silicium d'autres groupes de formule (III) et/ou par les atomes métalliques dans un ou plusieurs ponts de réticulation des formules générales (IV) suivantes : 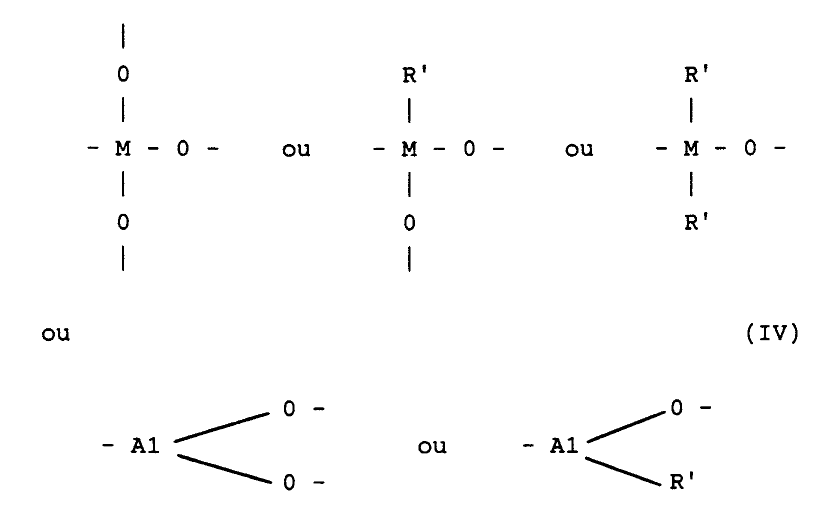 M étant un atome de silicium, de titane ou de zirconium et R' un groupe alkyle linéaire ou ramifié de 1 à 5 atomes de C ou un groupe phényle et la proportion des atomes de silicium des groupes de formule générale (III) aux atomes métalliques dans les ponts de formules générales (IV) va de 1 : 0 à 1 : 10,
X dans la formule (II) représente 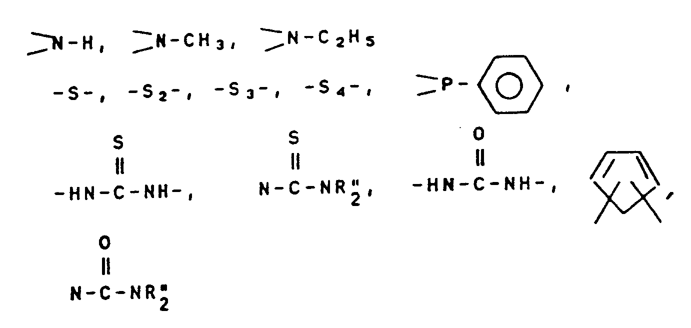 dans lesquelles R" représente un H ou un groupe alkyle linéaire ou ramifié de 1 à 5 atomes de C, et dans lesquels la proportion des unités de formule (I) aux unités de formule (II) va de 0,01 : 99,99 à 99,99 : 0,01 % molaire, de préférence de 5 : 95 à 95 : 5 % molaire.

2. Copolycondensats organosiloxane-amine selon la revendication 1, caractérisés en ce qu'ils se présentent sous forme de ce qu'on appelle des copolycondensats statistiques, de blocs-copolycondensats ou de mélanges de ces formes.

3. Copolycondensats organosiloxane-amine selon les revendications 1 et 2, caractérisés en ce que les groupes R¹ à R⁵ représentent un groupe de formule générale :

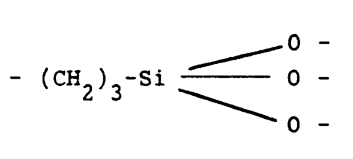

4. Procédé de fabrication de copolycondensats statistiques organosiloxane selon les revendications 1 à 3, caractérisé en ce qu'on dissout un aminoorganosilane de formule générale : 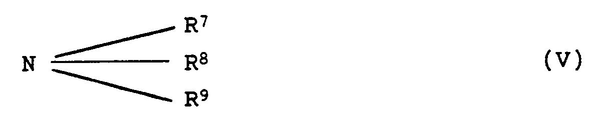 ainsi qu'un silane organofonctionnel 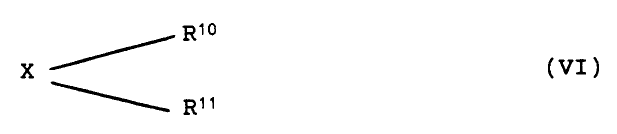 selon la composition stoechiométrique souhaitée du copolycondensat à préparer dans lesquelles, les groupes R⁷ à R¹¹ sont identiques ou différents et représentent un groupe de formule générale :
R⁶- Si(OR¹²)₃ (VII)
R⁶ a la même signification que dans la formule (III),
R¹² représente un groupe alkyle linéaire ou ramifié de 1 à 5 atomes de C et,
X a la même signification que dans la formule (II), le cas échéant après addition d'un ou plusieurs agents réticulants de formule générale : 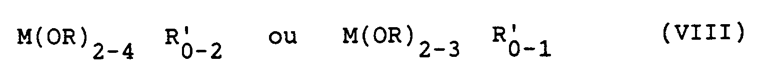 dans laquelle M est un atome de silicium, de titane, de ziconium ou d'aluminium,
R' est un groupe alkyle linéaire ou ramifié avec 1 à 5 atomes de C ou un groupe phényle et R est un groupe alkyle, linéaire ou ramifié avec de 1 à 5 atomes de C et la proportion d'atomes de silicium des groupes de formule générale (VII) aux atomes de métal dans les ponts est de 1 : 0 à 1 : 10, dans un solvant largement miscible à l'eau mais dissolvant l'aminoorganosilane de formule (V) et le silane organofonctionnel de formule (VI) ainsi que l'agent réticulant, et on ajoute à la solution en agitant une quantité d'eau au moins suffisante pour réaliser l'hydrolyse et la condensation complète, ensuite on fait gélifier le mélange réactionnel en continuant d'agiter à une température déterminée dans l'intervalle compris entre la température ambiante et 200°C, on mélange le solide qui se forme, le cas échéant après addition de solvant supplémentaire ou d'eau, pendant une durée jusqu'à 48 heures à une température comprise entre la température ambiante et 200°C, sous pression atmosphérique, ou sous une pression qui correspond à la somme des pressions partielles à chaque température, ensuite on sépare le polycondensat formé de la phase liquide par des techniques appropriées, on lave le cas échéant, on sèche à une température comprise entre la température ambiante et 250°C, le cas échéant sous atmosphère protectrice de gaz ou sous vide, on traite thermiquement ensuite le cas échéant pendant 1 à 100 heures à des températures comprises entre 150 et 300°C, sous atmosphère protectrice de gaz ou sous vide, le cas échéant on broie et/ou on tamise.

5. Procédé selon la revendication 4, caractérisé en ce qu'on utilise comme solvant lors de l'hydrolyse, du méthanol, de l'éthanol, du n- et de l'i-propanol, du n- et de l'i-butanol ou du n-pentanol, seuls ou en mélange.

6. Procédé selon la revendication 4 ou 5, caractérisé en ce qu'on réalise l'hydrolyse avec un excès d'eau.

7. Procédé selon les revendications 4 à 6, caractérisé en ce qu'on précondense les composants monomères de formules (V) et (VI) et le ou les agents réticulants présents le cas échéant, sans ou avec l'utilisation d'un solvant (selon la revendication 5) en présence de 1 à 100 % molaire de la quantité d'eau qui serait stoechiométriquement nécessaire pour l'hydrolyse complète, pendant un temps de 5 minutes à 72 heures, à une température comprise entre la température ambiante et 200°C, le cas échéant en ajoutant un catalyseur de condensation, et ensuite après addition d'une quantité supplémentaire d'eau et le cas échéant de solvant supplémentaire, on continue de réaliser le procédé code à la revendication 4.

8. Procédé de fabrication de bloc-copolycondensats selon les revendications 1 à 3, caractérisé en ce qu'on précondense les composants monomères de formules (V) et (VI) de la revendication 4, avec le cas échéant la présence du ou des agents réticulants chacun indépendamment l'un de l'autre entre 5 minutes et 72 heures, sans ou avec l'utilisation d'un solvant (selon la revendication 5), en présence de 1 à 100 % molaire de la quantité d'eau qui serait chaque fois stoechiométriquement nécessaire à l'hydrolyse complète, entre la température ambiante et 200°C, le cas échéant en ajoutant un catalyseur de condensation, ensuite on réunit les précondensats et ensuite après addition d'une quantité d'eau supplémentaire et le cas échéant de solvant supplémentaire, on continue de réaliser le procédé comme à la revendication 4.

9. Procédé de fabrication de copolycondensats mélangés selon les revendications 1 à 3, caractérisé en ce qu'on ne précondense qu une partie des monomères de formules (V), (VI) et (VIII) de la revendication 4 à mettre en oeuvre, indépendamment l'un de l'autre entre 5 minutes et 72 heures, sans ou avec l'utilisation d'un solvant (selon la revendication 5), en présence de 1 à 100 % molaire de la quantité d'eau qui serait chaque fois stoechiométriquement nécessaire à l'hydrolyse complète, entre la température ambiante et 200°C, le cas échéant en ajoutant un catalyseur de condensation, ensuite on réunit le(s) précondensat(s) avec le(s) composant(s) non précondensé(s) et ensuite après addition d'une quantité d'eau supplémentaire et le cas échéant de solvant supplémentaire, on continue de réaliser le procédé comme à la revendication 4.

10. Utilisation des copolycondensats produits d'après l'invention selon les revendications 1 à 3, dans lesquels X représente : 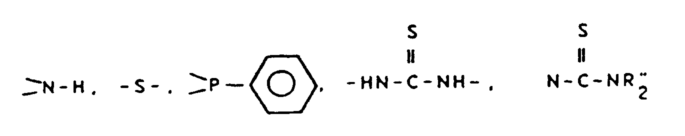 R" ayant la même signification que dans la revendication 1, pour retenir des métaux dissous à partir de phases liquides aqueuses ou organiques.

11. Utilisation de copolycondensats produits d'après l'invention selon les revendications 1 à 3 pour l'adsorption de composés organiques gazeux et de vapeur d'eau, de préférence de solvants organiques.
